Europäisches Patentamt

European Patent Office

Office européen des brevets

(11) Numéro de publication: **0 426 586 A1**

# DEMANDE DE BREVET EUROPEEN

(21) Numéro de dépôt: **90420474.0**

(22) Date de dépôt: **31.10.90**

(51) Int. Cl.⁵: **F16K 3/02, F16K 27/04**

(30) Priorité: **31.10.89 FR 8914729**

(43) Date de publication de la demande:
**08.05.91 Bulletin 91/19**

(84) Etats contractants désignés:
**AT BE CH DE DK ES FR GB GR IT LI LU NL SE**

(71) Demandeur: **Les Mitigeurs ERAM**
**76-80, rue des Rancy**
**F-69003 Lyon(FR)**

(72) Inventeur: **Cattaneo, Piero**
**Via Stazione 21**
**I-28010 Cavaglio d'Agogna (NO)(IT)**
Inventeur: **Laurent, René**
**47 avenue Paul Santy**
**F-69008 Lyon(FR)**

(74) Mandataire: **Maureau, Philippe et al**
**Cabinet GERMAIN & MAUREAU BP 3011**
**F-69392 Lyon Cédex 03(FR)**

(54) **Robinet, notamment pour installation sanitaire.**

㉗ Robinet du type comprenant un corps creux (2), dans l'une des faces duquel sont ménagés deux orifices, respectivement, d'entrée (3) et de sortie (4) de fluide, et à l'intérieur duquel est monté un plateau fixe (5) comportant deux ouvertures (7, 8) en communication avec les orifices d'entrée et de sortie de fluide.

Selon l'invention, à l'intérieur du corps (2) est monté un second plateau (9), en contact étanche avec le premier, comportant une ouverture (10), et monté déplaçable en translation de façon à pouvoir soit obturer l'un des deux orifices du premier plateau, soit permettre une communication entre ceux-ci, avec une section de passage réglable.

FIG.1

## ROBINET, NOTAMMENT POUR INSTALLATION SANITAIRE

La présente invention a pour objet un robinet, notamment pour installation sanitaire.

Un robinet comprend un orifice d'entrée d'eau froide ou chaude, un orifice de sortie d'eau, ainsi que des moyens de mise en communication de ces deux orifices.

Un robinet pour installation sanitaire peut être utilisé séparément, ou en combinaison avec un autre robinet fournissant une eau d'une température différente, les orifices de sortie d'eau à deux températures différentes étant reliés à un bec de distributionn commun formant mélangeur.

Il existe différents moyens de mise en communication des deux orifices d'un robinet.

Une première solution consiste à réaliser le déplacement axial d'un clapet vis-à-vis de son siège pour réaliser ou non l'étanchéité au niveau de ce siège. Ce mouvement axial est obtenu par entraînement en rotation d'un bouton de manoeuvre, cette rotation le long d'un filetage s'accompagnant d'un mouvement de translation du clapet associé.

Une autre solution consistant toujours à mettre en oeuvre la rotation, prévoit deux disques, par exemple en céramique, en contact l'un avec l'autre, l'un de ces disques étant monté fixe dans le corps du robinet et l'autre étant monté pivotant sous l'action d'un bouton de manoeuvre.

Le premier disque fixe comporte deux ouvertures d'entrée et de sortie en forme de secteur circulaire, tandis que le second disque comporte deux ouvertures correspondantes susceptibles, par entraînement en rotation de ce disque, d'être amenées ou non en regard des ouvertures du premier disque. Lorsque les ouvertures des deux disques sont décalées angulairement et sans une de coïncidence, le robinet est fermé, tandis que, lorsque les deux disques comportent des ouvertures se chevauchant plus ou moins, le robinet laisse le passage de fluide.

Quelle que soit la solution envisagée, le corps du robinet peut être vertical ou horizontal, selon que l'axe de rotation du mouvement de commande est lui-même vertical ou horizontal.

Il en résulte un encombrement important, avec nécessité de placer à distance l'un de l'autre les deux robinets appartenant à un même mélangeur, ce qui complique la manoeuvre de ceux-ci. En outre, cette manoeuvre est obtenue par pivotement d'un bouton sur un angle au moins égal à 180°, ce qui constitue une opération délicate à réaliser pour des personnes ne disposant pas d'une excellente mobilité de leurs doigts, ainsi qu'également lorsque l'on souhaiterait actionner le robinet dans un sens d'ouverture en le touchant le moins possible avec les doigts, par exemple lorsque les doigts de l'utilisateur sont tachés et risqueraient de souiller le bouton de manoeuvre.

La présente invention vise à remédier à ces inconvénients.

A cet effet, ce robinet, du type comprenant un corps creux, dans l'une des faces duquel sont ménagés deux orifices respectivement d'entrée et de sortie de fluide, et à l'intérieur duquel est monté un plateau fixe comportant deux ouvertures en communication avec les orifices d'entrée et de sortie de fluide, est caractérisé en ce qu'à l'intérieur du corps est monté un second plateau, en contact étanche avec le premier, comportant une ouverture, et monté déplaçable en translation de façon à pouvoir soit obturer l'un des deux orifices du premier plateau, soit permettre une communication entre ceux-ci, avec une section de passage réglable.

L'originalité de ce robinet résulte dans le fait que ses mouvements d'ouverture et de fermeture ne sont pas obtenus comme tel est le cas habituellement, par un mouvement de rotation, mais par un mouvement de translation. Ceci permet de disposer d'un robinet dont le corps est de dimensions extrêmement réduites, puisque l'on n'est plus tenu par les dimensions imposées par des organes tournants. Il est donc possible de juxtaposer, de façon étroite, deux robinets selon l'invention pour réaliser un mélangeur, ou encore d'obtenir des robinets dont les corps peuvent posséder une esthétique nouvelle, compte tenu du faible encombrement imposé par le mécanisme.

Selon une caractéristique de l'invention, le second plateau est rendu solidaire, par sa face opposée à celle en appui contre le premier plateau, d'un élément de manoeuvre qui, assurant également son guidage en translation, est actionné par l'organe de commande du robinet.

Avantageusement, dans ce cas, l'élément de manoeuvre comporte une paroi parallèle au second plateau dans la face, tournée du côté opposé à ce plateau, de laquelle est ménagé un évidement de forme générale rectangulaire dont les bords longitudinaux sont orientés dans la direction de déplacement du second plateau, dans laquelle est engagée une extrémité d'un levier qui, comportant deux bords parallèles en appui contre les bords longitudinaux de l'ouverture, est monté articulé autour d'un axe contenu dans un plan parallèle aux plateaux et perpendiculaire à la direction de déplacement du second plateau.

En outre, l'axe d'articulation du levier est monté dans la pièce de fermeture du corps creux, une partie du levier, située par rapport à l'axe du côté opposé à l'extrémité engagée dans l'évidement de l'élément de manoeuvre, dépassant du corps et formant organe de commande.

Cet aménagement est particulièrement avantageux car permettant, à l'aide d'une très faible course angulaire du levier de commande, de réaliser une course suffisante du plateau mobile pour faire passer celui-ci d'une position d'ouverture totale à une position de fermeture totale.

En outre, cet agencement avec des leviers constitutifs des éléments de commande est avantageux car permettant, dans le cas d'un mélangeur, de juxtaposer étroitement deux robinets, ce qui permet l'actionnement de leurs leviers de commande respectifs à l'aide d'une seule main permettant ainsi une utilisation des deux robinets mélangeurs à la façon d'un mitigeur.

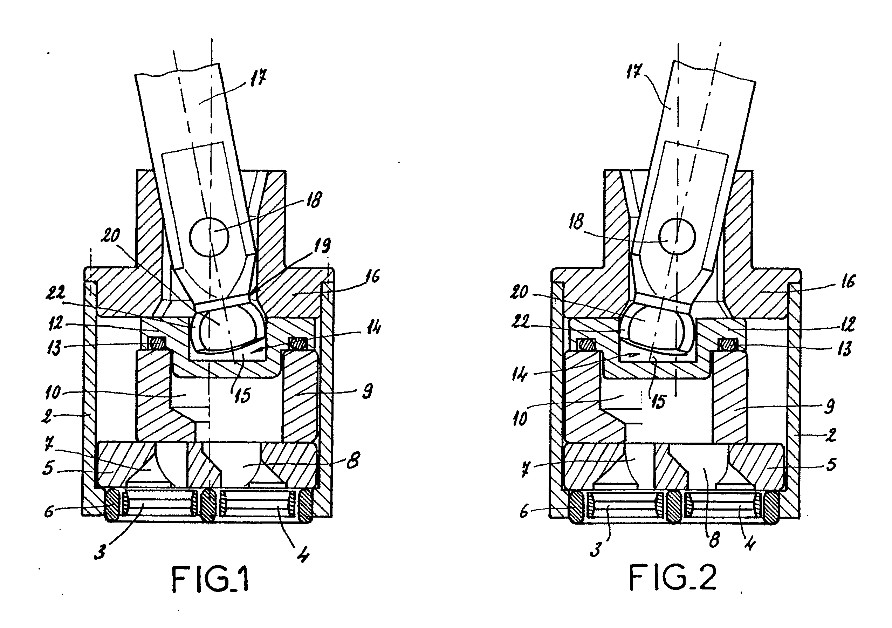

De toute façon, l'invention sera bien comprise à l'aide de la description qui suit, en référence au dessin schématique annexé représentant, à titre d'exemple non limitatif, une forme d'exécution de ce robinet dont les figures 1 et 2 en sont des vues en coupe longitudinale, respectivement, en position de fermeture et en position d'ouverture.

Ce robinet comprend, de façon connue, un corps creux 2 dans le fond duquel débouchent deux orifices 3 et 4, respectivement, d'entrée et de sortie d'eau.

Le corps 2, représenté au dessin, peut posséder une section rectangulaire, la coupe correspondant aux figures 1 et 2 étant une coupe longitudinale.

Dans le fond du corps est disposé un plateau fixe 5 monté avec interposition de joints d'étanchéité 6, et comportant deux ouvertures 7 et 8 en regard, respectivement, des orifices 3 et 4 d'amenée et de sortie d'eau. Sur le plateau fixe est monté, en contact étanche, un second plateau 9 qui comporte, pour sa part, une ouverture centrale 10. Cette ouverture centrale 10 est de section telle qu'elle permet soit un isolement entre les deux ouvertures 7 et 8, comme représenté à la figure 1, soit une mise en communication de ces deux ouvertures.

Le plateau mobile 9 possède un prolongement tubulaire vers le haut. La partie supérieure de ce prolongement tubulaire forme une zone d'appui pour un élément de manoeuvre 12, comportant une partie périphérique en appui contre le prolongement tubulaire du plateau 9, et une partie centrale en forme de cuvette, engagée dans le prolongement tubulaire. Un joint d'étanchéité 13 est monté entre l'élément de manoeuvre 12 et le prolongement du plateau mobile.

Dans la face supérieure de l'élément de manoeuvre débouche un évidement 14 de forme générale rectangulaire, délimité notamment par deux bords parallèles 15 orientés dans le sens de la longueur. Le corps 2 est fermé par une pièce de fermeture 16, qui est traversée par un levier 17 monté pivotant autour d'un axe 18 contenu dans un plan parallèle aux plateaux 5 et 9, et d'orientation perpendiculaire à la direction de déplacement du plateau mobile 9.

L'extrémité inférieure de ce levier 17 est constituée par un embout 19 engagé dans l'évidement 14, possèdant deux bords parallèles 20 en appui contre les bords 15 de l'évidement, et deux bords arrondis 22 destinés à prendre appui sur les deux autres bords de l'évidement.

La partie du levier 17, située de l'autre côté de l'axe d'articulation 18, déborde largement du corps 2 et sert d'organe de commande.

Le fonctionnement de ce robinet est le suivant.

Dans la position représentée à la figure 1, le plateau mobile 9 obture l'ouverture 7 d'amenée d'eau. Le robinet est dans sa position fermée. Pour réaliser l'ouverture du robinet, il suffit de pousser la partie supérieure du levier 17 dans le sens de la flèche de figure 1, mouvement au cours duquel l'embout 19 réalise un mouvement de translation du plateau mobile 9, l'amenant dans la position représentée à la figure 2, où les ouvertures 7 et 8 sont mises en communication par l'intermédiaire de l'ouverture 10.

Selon la position du plateau mobile dans son mouvement de translation, la section de passage est plus ou moins importante, ce qui permet de réaliser un réglage du débit.

Il ressort de ce qui précède que ce robinet apporte une grande amélioration à la technique existante, compte tenu de la simplicité de sa structure, de son nombre réduit de pièces, de son faible encombrement, et de sa simplicité de manoeuvre; puisqu'il suffit d'exercer une action de faible amplitude sur le levier de commande pour passer de la position de fermeture à la position d'ouverture et inversement.

Comme il va de soi, l'invention ne se limite pas à la seule forme d'exécution de ce robinet, décrite ci-dessus, à titre d'exemple; elle en embrasse, au contraire, toutes les variantes de réalisation.

C'est ainsi notamment que les moyens de commande en translation du plateau mobile pourraient être différents sans que l'on sorte pour autant du cadre de l'invention.

**Revendications**

1. - Robinet, notamment pour installation sanitaire, du type comprenant un corps creux (2), dans l'une des faces duquel sont ménagés deux orifices, respectivement d'entrée (3) et de sortie (4) de fluide, et à l'intérieur duquel est monté un plateau fixe (5) comportant deux ouvertures (7, 8) en communication avec les orifices d'entrée et de sortie de fluide, caractérisé en ce qu'à l'intérieur du corps (2) est monté un second plateau (9) en contact étanche avec le premier, comportant une ouverture (10), et monté déplaçable en translation de façon à pouvoir soit obturer l'un des deux orifices du premier plateau, soit permettre une communication entre ceux-ci, avec une section de passage réglable.

2. - Robinet selon la revendication 1, caractérisé en ce que le second plateau (9) est rendu solidaire par sa face opposée à celle en appui contre le premier plateau, d'un élément de manoeuvre (12) qui, assurant également son guidage en translation, est actionné par l'organe de commande du robinet.

3. - Robinet selon la revendication 2, caractérisé en ce que l'élément de manoeuvre (12) comporte une paroi parallèle au second plateau dans la face, tournée du côté opposé à ce plateau, de laquelle est ménagé un évidement (14) de forme générale rectangulaire dont les bords longitudinaux sont orientés dans la direction de déplacement du second plateau, dans laquelle est engagée une extrémité (19) d'un levier (17) qui, comportant deux bords parallèles (20) en appui contre les bords longitudinaux (15) de l'ouverture, est monté articulé autour d'un axe (18) contenu dans un plan parallèle aux plateaux et perpendiculaire à la direction de déplacement du second plateau.

4. - Robinet selon la revendication 3, caractérisé en ce que l'axe d'articulation (18) du levier (17) est monté dans la pièce (16) de fermeture du corps creux (2), une partie du levier, située par rapport à l'axe du côté opposé à l'extrémité engagée dans l'évidement (14) de l'élément de manoeuvre, dépassant du corps et formant organe de commande.

FIG.2

FIG.1

**Office européen
des brevets**

**RAPPORT DE RECHERCHE
EUROPEENNE**

Numéro de la demande

**EP 90 42 0474**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-C-5 374 98 (NOLL)<br>* Figures 3,4 *<br>– – – | 1 | F 16<br>K 3/02<br>F 16 K 27/04 |
| A | FR-A-2 485 682 (DELKER)<br>* Page 2, ligne 35 - page 3, ligne 19 *<br>– – – | 1,2,4 | |
| A | FR-A-2 564 933 (LORCH)<br>* Page 8, ligne 36 - page 9, ligne 13 *<br>– – – | 1,3 | |
| A | CH-A-6 553 70 (DUBOULOZ)<br>– – – – – | | |

DOMAINES TECHNIQUES
RECHERCHES (Int. Cl.5)

F 16 K

Le présent rapport de recherche a été établi pour toutes les revendications

| Lieu de la recherche | Date d'achèvement de la recherche | Examinateur |
|---|---|---|
| La Haye | 01 février 91 | VERELST P.E.J. |